# FASCICULE DE BREVET EUROPEEN

(11) **EP 4 074 890 B1**
(45) Date de publication et mention de la délivrance du brevet: **13.03.2024**
(21) Numéro de dépôt: 22168042.4
(22) Date de dépôt: 12.04.2022
(51) Int. Cl.: D21H 11/14, A01G 13/02

(54) **COMPOSITION, PELLET DE MATRICE VÉGÉTALE ET PROCÉDÉ DE FABRICATION**
ZUSAMMENSETZUNG, PELLET AUS PFLANZLICHER MATRIS UND HERSTELLUNGSVERFAHREN
COMPOSITION, PLANT MATRIX PELLET AND MANUFACTURING METHOD

(30) Priorité: 13.04.2021 FR 2103795
(43) Date de publication de la demande: 19.10.2022
(73) Titulaire: Hydrofib, 34150 Montpeyroux (FR)
(72) Inventeur: BOEUF, Jean-Michel, 34150 MONTPEYROUX (FR)
(74) Mandataire: Cornuejols, Georges

(56) Documents cités:
- CA-A1- 2 765 590
- US-A- 5 585 150

## Description

### DOMAINE TECHNIQUE DE L'INVENTION

La présente invention vise une composition, un pellet de matrice cellulosique et un procédé de fabrication. Elle entre dans le domaine des revêtements organiques de sols et plus particulièrement de l'hydroensemencement. Ces revêtements organiques sont utilisés afin de protéger les sols de l'érosion climatique. Lorsqu'ils sont appliqués avec de l'eau et des semences, ces revêtements organiques permettent de revégétaliser les sols.

L'hydroensemencement est par exemple utilisé pour revégétaliser les sols de talus qui bordent les voies de circulation routière, ferroviaire etc. De manière plus générale, l'hydroensemencement est utilisé pour revégétaliser des sols, notamment dans les cas où le climat ou la topographie rend aléatoires les techniques classiques de semis.

L'invention se rapporte plus précisément à une composition d'une matrice cellulosique utilisée dans le cadre de l'hydroensemencement comme revêtement des sols. Selon l'invention, la composition peut être produite sous la forme de pellets de matrice cellulosique.

### ÉTAT DE LA TECHNIQUE

L'hydroensemencement est une technique connue de revêtement des sols. À l'heure actuelle, l'hydroensemencement est pratiqué à l'aide d'une matrice cellulosique en vrac conditionnée sous forme de ballots. Ces ballots possèdent des dimensions relativement importantes de 60 à 80 cm de long, sur 20 à 40 cm de haut et 30 à 50 cm de large. Ce qui correspond à un volume d'environ 60 à 80 dm³. La masse volumique de ces ballots est généralement comprise entre 175 et 300 kg/m³.

La demanderesse décrit la composition d'une matrice cellulosique d'un ballot dans le document FR 3 063 748. La composition décrite dans ce document comporte en pourcentage massique par rapport au total de leurs masses :
- 20% à 40 % de fibres de cellulose unitaires issues de papier,
- 30 % à 60 % de fibres de bois,
- 15 % à 30 % d'engrais organique,
- 2 % à 6 % de sel minéral et
- 0 à 2 % d'agent collant.

Le mélange de fibres de cellulose et de fibres de bois contribue à augmenter les capacités de rétention en eau de la matrice cellulosique. De manière connue, l'engrais renforce la masse racinaire et foliaire du végétal implanté. Les sels minéraux confèrent à la matrice fibreuse un apport complémentaire. Enfin, l'agent collant contribue, d'une part, à assurer la cohésion de la matrice cellulosique, et d'autre part, à fluidifier la matrice lors de l'application par un procédé d'hydroensemencement.

Lors de l'hydroensemencement, ces ballots sont délités dans l'eau en présence de semences. La matrice cellulosique mêlée notamment à l'eau est projetée sur le sol à recouvrir. Ces deux opérations sont réalisées à l'aide d'une machine appelée « hydroseeder ». Classiquement, un hydroseeder comporte une cuve équipée de moyens de brassage mécanique afin de déliter le ballot de matrice cellulosique. La cuve comporte bien entendu une trappe permettant d'insérer le ballot de matrice cellulosique. Enfin, l'hydroseeder comporte des moyens de projection de la matrice cellulosique délitée dans l'eau.

Les hydroseeders de grande capacité de cuve, supérieure à 7 m³, possèdent des moyens de brassage mécanique qui permettent de déliter efficacement le ballot de matrice cellulosique en vrac. En revanche, les hydroseeders dont la capacité de la cuve est inférieure à 3 m³, dits de petite capacité, possèdent généralement des moyens de brassage hydraulique qui comportent uniquement une pompe de recirculation du mélange. De fait, les ballots de matrice cellulosique ayant une masse volumique supérieure à 50 kg/m³ ne peuvent être décompactés efficacement. Le délitement d'un ballot de matrice cellulosique en vrac doit alors être effectué par délitement ou émiettage manuel, mode opératoire particulièrement chronophage, peu efficace et ne garantissant pas l'absence de bouchage dans la pompe de recirculation. Pour ces raisons, les hydroseeders de petite capacité sont peu utilisés. Ceci constitue un frein pour le développement de la technique d'hydroensemencement dans tous les contextes ou l'utilisation d'hydroseeder de grande capacité n'est pas possible.

Par ailleurs, la trappe d'un hydroseeder de petite capacité peut posséder des dimensions plus restreintes que la trappe d'un hydroseeder de grande capacité, rendant impossible l'introduction dans la cuve d'un ballot entier de matrice cellulosique en vrac.

Il existe des matrices cellulosiques conformées sous forme de pellets de petites dimensions avant d'être conditionnées en ballots. Individuellement ces pellets mesurent entre 5 à 30 mm de long pour 4 mm de diamètre, ce qui facilite l'introduction de la matrice cellulosique notamment pour les hydroseeders de petite capacité.

La composition de matrice cellulosique de ces pellets comporte, en pourcentage massique par rapport au total de leurs masses :
- 58 % de fibres de cellulose,
- 37% de fibres de bois, et
- 5 % d'un agent collant.

L'agent collant utilisé est un polymère artificiel de type polyacrylamide de sodium. Bien qu'il soit en faible quantité, l'agent collant artificiel constitue une source de pollution des sols à recouvrir.

Si le format de ces pellets facilite leur introduction par la trappe d'un hydroseeder de petite capacité, leur délitement dans l'eau n'est pas complet et nécessite un temps de recirculation trop long. De plus, un mauvais délitement contrevient également à la qualité de la projection de la matrice cellulosique hydratée.

On connait le brevet US5585150A qui divulgue une composition biodégradable pour paillage constituée de matériau fibreux cellulosique provenant de papier et comportant un adhésif de liaison. Le conditionnement de cette composition permet son application directement sur le sol à recouvrir, sans qu'un hydroensemencement soit mis en oeuvre. Une telle composition n'est donc pas adaptée pour l'hydroensemencement. Par ailleurs, l'adhésif de liaison divulgué correspond à un mélange d'émulsion de néoprène ou un mélange d'homopolymère d'acétate de vinyle avec des résines acryliques. De tels adhésifs de liaison sont utilisés notamment pour leur résistance à l'eau et ne permettent donc pas, par définition, un délitement rapide au contact de l'eau. De plus, de tels adhésifs de liaison artificiels constituent également une source de pollution des sols à recouvrir.

On connait la demande de brevet CA2765590 qui divulgue un mélange d'hydroensemencement comportant des matériaux issus du papier, du bois et du « bio-char » (abréviation de « bio-charcoal » en anglais signifiant « charbon de bois ») issu de la torréfaction ou de la pyrolyse de bois. Un conditionnement de la composition sous forme de cube ou de botte est divulgué. Un tel conditionnement est notamment obtenu par extrusion. Cependant, la mise en oeuvre d'un agitateur mécanique est nécessaire lors du délitement de la composition pour former le mélange d'hydroensemencement. On retrouve de tels agitateurs dans des machines d'hydroensemencement présentant une dimension importante. La nature de la composition divulguée et son conditionnement ne permettent donc pas un délitement efficace dans l'eau lors de la formation du mélange d'hydroensemencement, sans mise en oeuvre d'un système d'agitation complexe et coûteux.

### PRESENTATION DE L'INVENTION

Au regard des inconvénients précédemment énumérés de l'état de la technique, la demanderesse a développé une solution technique permettant d'améliorer la qualité de la projection de la matrice cellulosique en vrac mais aussi la vitesse de délitement de la matrice cellulosique au contact de l'eau.

À cet effet, un premier aspect de la présente invention concerne une composition qui comporte :
- des fibres de cellulose issues du papier,
- des fibres de bois,
- de la biomasse végétale pyrolysée, et
- un agent gélifiant hydrosoluble.

La composition selon l'invention peut être qualifiée de composition de matrice cellulosique pour la couverture de sols.

L'association de la biomasse végétale pyrolysée et de l'agent gélifiant, d'une part, favorise la cohésion de la composition à sec, et d'autre part, participe au délitement immédiat, en moins d'une minute, de la composition au contact d'eau, par exemple dans une cuve d'un hydroseeder.

Le délitement immédiat de la composition au contact de l'eau permet de désagréger la composition qui revient à l'état fibreux au sein de la cuve d'hydroseeder. En d'autres termes, les paquets de fibres de la composition se désagrègent et se dispersent dans l'eau en moins d'une minute. Ainsi, on obtient une application optimale de la composition de matrice cellulosique hydratée sur le sol à recouvrir.

Assurer un mélange efficace de la composition avec l'eau et les semences par brassage hydraulique permet de rendre efficace le traitement des chantiers de recouvrement de petites et moyennes tailles à l'aide d'un hydroseeder de petite capacité.

Dans des modes de réalisation, la composition comporte en pourcentage massique par rapport au total de leurs masses :
- 10 à 70% de fibres de cellulose,
- 10 à 70 % de fibres de bois,
- 1 à 20% de biomasse végétale pyrolysée, et
- 1 à 10 % de l'agent gélifiant hydrosoluble.

Ces proportions massiques assurent un délitement efficace de la composition au contact de l'eau.

Dans des modes de réalisation, la composition comporte, en pourcentage massique par rapport à la masse totale de la composition hors eau additionnelle, 3 à 12 % de biomasse végétale pyrolysée.

Dans des modes de réalisation, la composition comporte, en pourcentage massique par rapport à sa masse totale hors eau additionnelle, 2 à 8 % d'agent gélifiant hydrosoluble, et, préférentiellement, 3 à 5 % d'agent gélifiant hydrosoluble.

Un délitement efficace de la matrice cellulosique a été particulièrement constaté avec les proportions de biomasse végétale pyrolysée et d'agent gélifiant indiquées ci-dessus.

Dans des modes de réalisation, l'agent gélifiant hydrosoluble comporte un polysaccharide hydrosoluble choisi parmi les composés suivants : du galactomannane, du glucomannane, du β-glucan, de l'agar-agar, du carraghénane, ou un mélange de ces composés.

L'utilisation d'un polysaccharide hydrosoluble favorise le délitement de la composition au contact de l'eau. Par ailleurs, il existe une grande variété de polysaccharides hydrosolubles issus de matière végétale, qui permettent de produire une composition selon une démarche éco-responsable.

Dans des modes de réalisation, la composition comporte une proportion massique des fibres de cellulose par rapport aux fibres de bois qui diffère d'une composition à l'autre, ladite proportion massique étant comprise entre un rapport 9 :1 et un rapport 1 :9. Ceci permet d'adapter les propriétés de la composition à la typicité des sols.

Dans des modes de réalisation, la composition comporte, de plus, du fertilisant.

Dans des modes de réalisation, la composition comporte en pourcentage massique par rapport au total de leurs masses :
- 10 à 70% de fibres de cellulose,
- 10 à 70 % de fibres de bois,
- 1 à 20% de biomasse végétale pyrolysée,
- 1 à 10 % de l'agent gélifiant hydrosoluble et
- 1 à 30 % de fertilisant.

Le fertilisant est utilisé lorsque les sols à recouvrir sont pauvres et nécessitent un apport en matière afin de permettre la croissance de végétaux.

Dans des modes de réalisation, le fertilisant comporte du sulfate de magnésium qui participe au développement des végétaux, le magnésium ayant notamment une action connue sur le développement racinaire.

Dans des modes de réalisation, le fertilisant comporte, de plus, un engrais. L'engrais apporte des nutriments nécessaires à la croissance des végétaux et participe notamment au développement racinaire.

Un deuxième aspect de l'invention concerne une utilisation de la composition définie selon le premier aspect de l'invention, la composition étant utilisée comme matrice cellulosique pour la couverture de sols afin de revégétaliser ces sols.

Un troisième aspect de l'invention se rapporte à un pellet de matrice cellulosique comprenant une composition définie selon le premier aspect de l'invention. Le pellet possède les mêmes avantages que la composition, à savoir, qu'il se délite rapidement au contact de l'eau individuellement ou lorsqu'il se trouve en amas.

Dans des modes de réalisation, le pellet comporte des fibres de cellulose unitaires. Cette caractéristique participe également à conférer des propriétés de délitement rapide de la matrice cellulosique en milieu aqueux.

Un quatrième aspect de l'invention concerne un procédé de fabrication d'un pellet défini selon un troisième aspect de l'invention. Le procédé de fabrication comporte :
- une séquence d'étapes de formation d'une matrice cellulosique comprenant des fibres de cellulose unitaires, des fibres de bois, un agent gélifiant hydrosoluble et de la biomasse végétale pyrolysée, comportant au moins :
   - une étape de broyage de papier,
   - une étape de broyage de fibres de bois,
   - une étape de mélange des fibres de papier et de bois broyés,
   - une étape d'ajout d'agent gélifiant hydrosoluble et de biomasse végétale pyrolysée, et
   - une étape de mélange des fibres de papier et de bois broyés, d'agent gélifiant et de biomasse végétale pyrolysée ; et
- une étape de composition du pellet avec cette matrice cellulosique.

Le procédé de fabrication produit des pellets selon le troisième aspect de l'invention.

Dans des modes de réalisation, l'étape de composition du pellet comporte :
- une étape d'extrusion de la matrice cellulosique afin de conformer la matrice cellulosique selon un cylindre de diamètre déterminé,
- une étape de découpe du cylindre de matrice cellulosique afin de former des pellets de dimensions déterminées, et
- une étape de séparation entre les pellets découpés et des résidus de matrice cellulosique produits lors de la fabrication.

Les résidus de matrice cellulosique sont éventuellement réintroduits en amont de l'étape d'extrusion de la matrice cellulosique. Ceci contribue à optimiser les coûts de production des pellets en limitant les pertes de matière lors du process de fabrication.

Les buts, avantages et caractéristiques particulières de l'utilisation, du pellet et du procédé objets de la présente invention étant similaires à ceux de la composition objet de la présente invention, ils ne sont pas rappelés ici.

### BREVE DESCRIPTION DES FIGURES

D'autres avantages, buts et caractéristiques particulières de l'invention ressortiront de la description non limitative qui suit d'au moins un mode de réalisation de la présente invention, en regard des dessins annexés, dans lesquels :
[Fig.1] représente, schématiquement, le début d'une étude comparative de la vitesse de délitement au contact de l'eau de pellets comportant la composition de matrice cellulosique objets de l'invention par rapport à des pellets de l'état de l'art.
[Fig.2] représente, schématiquement, le résultat de l'étude comparative de la figure 1, les pellets objets de l'invention s'étant délités dans l'eau et formant un mélange fibreux hydraté.
[Fig.3] représente, au travers d'un diagramme, le procédé de fabrication des pellets objets de l'invention.

### DESCRIPTION DES MODES DE REALISATION

La présente description est donnée à titre non limitatif, chaque caractéristique d'un mode de réalisation pouvant être combinée à toute autre caractéristique de tout autre mode de réalisation de manière avantageuse.
On note dès à présent que les figures ne sont pas à l'échelle.

Un premier aspect de l'invention concerne une composition qui peut être utilisée comme matrice cellulosique pour la couverture des sols. En pratique, la composition de matrice cellulosique de l'invention est appliquée sur ces sols à l'aide d'un procédé d'hydroensemencement. À ce titre, la composition selon l'invention peut être qualifiée de composition de matrice cellulosique pour la couverture de sols.

Cette composition de matrice cellulosique est utile en vue de revégétaliser les sols. À cet effet, elle peut être mêlée à des semences lors de son application ou lors de sa préparation. De préférence, les semences sont mêlées à la matrice cellulosique lors de l'application afin de s'adapter à la typicité du sol à recouvrir. La composition selon l'invention permet d'élargir l'utilisation de la technique d'hydroensemencement à toutes les petites entreprises du paysage, voire aux particuliers, pour des applications précises sur de petits espaces collectifs ou privés. Un petit équipement suffit à l'hydroensemencement mettant en oeuvre cette composition. La composition selon l'invention permet aussi, à plus grande échelle, de revégétaliser des sols dans des sites industriels ou d'enfouissement, à proximité des voies routières ou ferroviaires (talus), ou encore dans le cadre de l'aménagement de zones urbaines ou périurbaines.

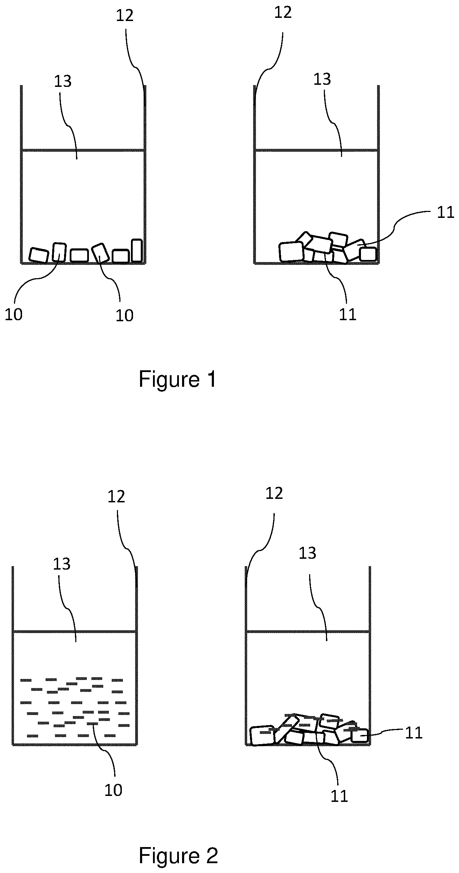

Comme cela est illustré à la figure 1, la composition de matrice cellulosique de l'invention peut prendre la conformation de pellets 10 de dimensions déterminées.

La matrice cellulosique qui compose les pellets 10 possède une composition de qui comporte :
- des fibres de cellulose issues du papier,
- des fibres de bois,
- de la biomasse végétale pyrolysée, et
- un agent gélifiant hydrosoluble.

Comme cela est décrit par la demanderesse dans le document FR 3 063 748, le mélange de fibres de cellulose et de fibres de bois contribue à augmenter les capacités de rétention en eau de la matrice cellulosique.

Le terme de « papier » recouvre ici tous les matériaux fabriqués à partir de fibres cellulosiques végétales, y compris le papier imprimé, de recyclage, le papier épais et le carton.

La biomasse végétale pyrolysée comporte une structure macromoléculaire en feuillet. De plus, elle possède des propriétés de rétention d'eau.

L'agent gélifiant hydrosoluble, d'une part, assure la cohésion de la matrice cellulosique, et d'autre part, participe au délitement de la matrice cellulosique au contact de l'eau. Autrement dit, l'agent gélifiant hydrosoluble, étant donné son caractère hydrophile, participe à une expansion, également appelée délitement, de la composition au contact de l'eau, par exemple, lors de la formation du mélange d'hydroensemencement.

On note que la biomasse végétale pyrolysée participe également au délitement de la matrice cellulosique au contact de l'eau.

De plus, lors du séchage du mélange appliqué sur un terrain, l'agent gélifiant assure notamment la création de ponts entre les différents types de fibre de la composition jouant ainsi un rôle de liant. Une composition à sec présentant une matrice cohérente après, par exemple, l'hydroensemencement sur un terrain, est donc obtenue. Une telle cohésion limite notamment une désagrégation de la composition séchée sur le terrain d'application, plus particulièrement sur des terrains présentant une pente importante.

Ainsi, l'agent gélifiant présente un double intérêt pour la composition puisqu'un tel agent gélifiant confère à la composition :
- une capacité de délitement dans l'eau améliorée, en combinaison avec la biomasse végétale pyrolysée, pour former un mélange et
- une capacité de re-solidification, après délitement dans l'eau suivi de l'application et du séchage du mélange. Une telle capacité correspond à une réversibilité de reconstitution de la composition après dissolution dans l'eau.

L'agent gélifiant hydrosoluble peut comporter un agent collant. Dans le cadre d'une démarche éco-responsable, l'agent gélifiant est préférentiellement d'origine végétale.

En particulier, l'agent gélifiant hydrosoluble peut être un polysaccharide hydrosoluble. Dans ce cas, le polysaccaride hydrosoluble est choisi parmi les composés suivants : du galactomannane, du glucomannane, du β-glucan, de l'agar-agar, du carraghénane, ou un mélange de ces composés.

Dans des modes de réalisation, l'agent gélifiant hydrosoluble comporte du galactomannane. Le galactomannane peut être issu de plusieurs composés d'origine végétale tels que la gomme de guar, la gomme de caroube, la gomme de tara, la gomme de casse, la gomme de fenugrec etc.

Dans des modes de réalisation, la composition comporte en pourcentage massique par rapport au total de leurs masses :
- 10 à 70% de fibres de cellulose,
- 10 à 70 % de fibres de bois,
- 1 à 10% de biomasse végétale pyrolysée, et
- 1 à 20 % de l'agent gélifiant hydrosoluble.

Dans des modes de réalisation, la composition consiste en pourcentage massique par rapport au total de leurs masses :
- 10 à 70% de fibres de cellulose,
- 10 à 70 % de fibres de bois,
- 1 à 10% de biomasse végétale pyrolysée, et
- 1 à 20 % de l'agent gélifiant hydrosoluble.

Ces compositions se sont avérées efficaces pour obtenir un délitement rapide des pellets 10 au contact de l'eau.

L'expérience illustrée en figures 1 et 2, compare le délitement de pellets 10 selon l'invention et le délitement de pellets 11 de l'état de la technique. La figure 1 illustre le début de l'expérience. Un amas de pellets 10 selon l'invention et un amas de pellets 11 de l'état de la technique, amas présentant une masse de 20 grammes, sont insérés dans deux contenants 12 de mêmes dimensions. Les deux contenants 12 sont remplis du même volume d'eau 13. La figure 2 correspond au suivi de l'expérience 30 secondes après l'introduction des amas de pellets 10 et 11 dans l'eau 13.

Comme cela est visible sur la figure 2, après une durée de 30 secondes, les pellets 10 sont complètement désagrégés ou délités. On observe alors un mélange fibreux 14 dispersé dans le fond du contenant 12. À l'inverse, les pellets 11 de l'état de l'art forment toujours un amas compact.

Notamment, le conditionnement sous forme de pellets 10 de telles compositions selon l'invention assure une expansion efficace et donc un délitement rapide des pellets 10 au contact de l'eau.

Pour l'expérience illustrée en figures 1 et 2, la composition comporte les proportions massiques suivantes par rapport au total de leurs masses :
- 45 % de fibres de cellulose,
- 46 % de fibres de bois,
- 6 % de biomasse végétale pyrolysée, et
- 3 % de l'agent gélifiant hydrosoluble.

Dans des modes de réalisation, la composition comporte 2 à 8 % d'agent gélifiant hydrosoluble en pourcentage massique par rapport à sa masse totale hors eau additionnelle. Dans des modes de réalisation, la composition comporte, en pourcentage massique par rapport à sa masse totale hors eau additionnelle, 3 à 5 % d'agent gélifiant hydrosoluble.

Dans des modes de réalisation, la composition comporte, en pourcentage massique par rapport à la masse totale de la composition hors eau additionnelle, 3 à 12 % de biomasse végétale pyrolysée.

Le tableau 1 ci-dessous expose six exemples de compositions objets de l'invention. Les proportions du tableau 1 sont en pourcentage massique par rapport à la masse totale de la composition hors eau additionnelle.

**Tableau 1**

| Exemples | Fibres de cellulose | Fibres de bois | Agent gélifiant hydrosoluble | Biomasse végétale pyrolysée |
|---|---|---|---|---|
| 1 | 37 % | 50% | 8% | 5% |
| 2 | 50% | 39% | 2% | 9% |
| 3 | 11% | 69% | 5% | 15% |
| 4 | 65% | 11% | 6% | 18% |
| 5 | 25 % | 61% | 4% | 10% |
| 6 | 42% | 35% | 10% | 12% |

Comme cela est illustré par les exemples 3 et 4 du tableau 1, la composition peut comprendre une proportion massique des fibres de cellulose par rapport aux fibres de bois qui diffère d'une composition à l'autre. Ici, cette proportion massique diffère pour les fibres de cellulose entre un rapport 9 :1 et un rapport 1 :9.

Dans des modes de réalisation, la composition comporte du fertilisant. Le fertilisant contribue à favoriser le développement de la végétation sur des sols pauvres. Dans ce contexte, la composition peut comporter 1 à 30 % de fertilisant. Notamment, les proportions massiques du fertilisant sont comprises entre 1 et 30 % par rapport à la masse totale de la composition hors eau additionnelle. Préférentiellement, les proportions massiques du fertilisant sont comprises entre 5 et 30 %.

Dans des modes de réalisation, la composition comporte en pourcentage massique par rapport au total de leurs masses :
- 10 à 70% de fibres de cellulose,
- 10 à 70 % de fibres de bois,
- 1 à 20% de biomasse végétale pyrolysée,
- 1 à 10 % de l'agent gélifiant hydrosoluble et
- 1 à 30 % de fertilisant.

En particulier, le fertilisant peut comporter du sulfate de magnésium, notamment du sulfate de magnésium heptahydraté. Ce composé est également connu sous la dénomination de sels d'Epsom. Le sulfate de magnésium favorise la germination et la croissance racinaire. Dans ces modes de réalisation, la composition peut comporter 1 à 10 %, de sulfate de magnésium en pourcentage massique par rapport à la masse totale de la composition hors eau additionnelle.

Dans des modes de réalisation, le fertilisant comporte, de plus, un engrais. Dans ce cas, la composition peut comporter 1 à 30% d'engrais en pourcentage massique par rapport à la masse totale de la composition hors eau additionnelle.

L'engrais apporte des nutriments organiques ou minéraux absents dans le sol ou épuisés par les cultures. L'engrais permet d'améliorer la croissance des plantes. Il est possible d'utiliser tous types d'engrais pour enrichir la composition.

Lorsque la composition comporte du sulfate de magnésium et de l'engrais, les proportions massiques de fertilisant correspondent à la somme de la proportion massique de l'engrais et du fertilisant.

Le tableau 2 ci-dessous expose quatre exemples de compositions objets de l'invention. Les proportions du tableau 2 sont en pourcentage massique par rapport à la masse totale de la composition hors eau additionnelle.

**Tableau 2**

| Exemples | Fibres de cellulose + fibres de bois | Agent gélifiant hydrosoluble | Biomasse végétale pyrolysée | Fertilisant |
|---|---|---|---|---|
| 1 | 83% | 6% | 3% | 8% |
| 2 | 70% | 4% | 10% | 16% |
| 3 | 50% | 10% | 11% | 29% |
| 4 | 75% | 7% | 8% | 10% |

Les exemples du tableau 2 confèrent aux pellets 10 des propriétés de désagrégation au contact de l'eau qui sont similaires à celles exposées ci-dessus.

Dans le tableau 2, le fertilisant peut comprendre de l'engrais et/ou du sulfate de magnésium dans les proportions décrites. De plus, les fibres de cellulose et les fibres de bois sont regroupées dans une même colonne. Ceci permet d'observer que les proportions massiques cumulées des fibres de bois et des fibres de cellulose peuvent différer d'une composition à l'autre entre 91% (expérience illustrée en figures 1 et 2) et 50% (exemple 3 du tableau 2).

La demanderesse a observé, lorsque la composition comporte des fertilisants, que la biomasse végétale fixe et libère progressivement les fertilisants. Ceci améliore le développement durable des végétaux.

Notamment, la biomasse végétale pyrolysée participe à cette rétention et libération progressive des fertilisants. Cet effet de fixation et de libération non immédiate des fertilisants est, par exemple, lié à la capacité de la biomasse végétale pyrolysée d'adsorber les fertilisants, une telle adsorption étant réversible.

Comme cela est précédemment évoqué, un deuxième aspect de l'invention concerne un pellet 10 de matrice cellulosique comprenant une composition objet de l'invention. À titre indicatif, les pellets 10, de forme cylindrique, peuvent posséder une dimension longitudinale comprise entre 5 et 25 mm pour un diamètre compris entre 1 à 5 mm.

Selon une particularité de l'invention, les pellets 10 comportent des fibres de cellulose unitaires. Cela signifie que des petits amas de fibres de cellulose, tels que des confettis, présentent des fibrilles de cellulose unitaires à la périphérie de l'amas de fibres. Ici, les fibres de cellulose sont, par exemple, issues du papier.

Par exemple, des fibres de cellulose unitaires sont obtenues par une étape de défibrage du papier. On rappelle ici, que le papier, broyé ou non, est composé de fibres de cellulose agglomérées. Le défibrage du papier consiste à désolidariser les fibres de cellulose agglomérées. Une fois le défibrage du papier effectué, les fibres de cellulose sont unitaires. Les fibres de cellulose unitaires issues de papier sont donc, par exemple, les fibres en sortie d'un défibreur de papier. Dans cet exemple, des pellets 10 comportant des fibres de cellulose unitaire sont obtenus à partir d'un matériau présentant des fibres de cellulose unitaires et provenant d'une étape de défibrage du papier.

Par ailleurs, un troisième aspect de l'invention concerne un procédé de fabrication d'un pellet 10 objet de l'invention.

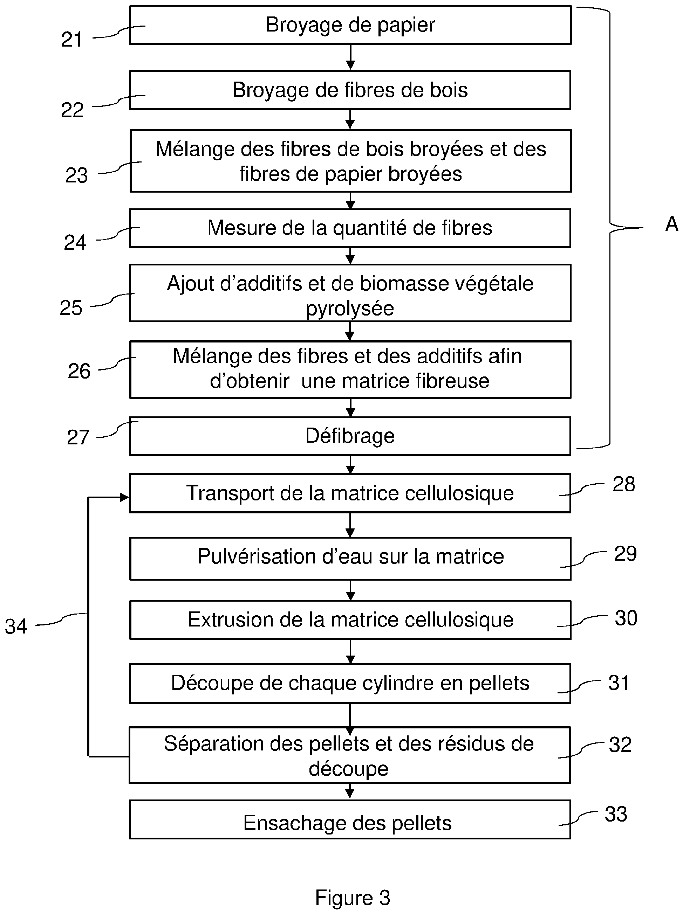

Comme illustré à la figure 3, le procédé 20 selon l'invention comporte une séquence A d'étapes de formation d'une matrice cellulosique comprenant des fibres de cellulose unitaires, des fibres de bois, un agent gélifiant hydrosoluble et de la biomasse végétale pyrolysée.

La séquence A de formation de la matrice cellulosique comporte une étape 21 de broyage de papier afin d'obtenir des fibres de cellulose. En pratique, le papier est introduit sous forme de feuille dans un broyeur qui le transforme en confettis. Le papier est, par exemple, du papier recyclé.

La séquence A comporte aussi une étape 22 de broyage de fibres de bois et une étape 23 de mélange des fibres de bois broyées et des fibres de papier broyées. Optionnellement, la séquence A comporte une étape 24 de mesure de la quantité de fibres de bois et de fibres de papier broyées et une étape 25 d'ajout d'additifs, par exemple de l'agent gélifiant hydrosoluble et de la biomasse végétale pyrolysée. Lorsque la composition doit comporter des fertilisants, ces fertilisants sont ajoutés lors de cette étape.

La mesure préalable 24 de la quantité de fibres de bois et de fibres de papier broyées permet d'ajuster les quantités d'additifs en fonction de la composition à produire.

La séquence d'étapes A comporte aussi une étape 26 de mélange des fibres de cellulose broyées, des fibres de bois broyées, et des additifs. Cette étape 26 permet d'obtenir une matrice fibreuse.

La séquence d'étapes A peut également comporter une étape 27 de défibrage des fibres de cellulose. Le papier étant constitué de fibres de cellulose agglomérées, cette étape 27 vise à obtenir des fibres de cellulose unitaires. Cette étape 27 permet de produire une matrice cellulosique comprenant des fibres végétales unitaires.

Certaines des étapes 21 à 27 sont décrites plus en détail par la demanderesse dans le document FR 3 063 748.

Par ailleurs, le procédé comporte une étape 28 de transport de la matrice cellulosique. La matrice cellulosique est transportée dans un silo tampon qui assure un approvisionnement régulier en matrice cellulosique pour réaliser des pellets.

Le procédé peut comporter une étape de pulvérisation 29 d'eau additionnelle sur la matrice cellulosique. L'étape de pulvérisation 29 permet de compacter la matrice cellulosique. Préférentiellement, l'étape de pulvérisation 29 est variable et conditionnée notamment par le taux d'humidité initial présent dans les fibres. Autrement dit, lorsque le taux d'humidité des fibres est supérieur à une valeur limite prédéterminée et considéré comme suffisant, l'étape de pulvérisation 29 est optionnelle dans le procédé. Au contraire, lorsque le taux est inférieur à une valeur limite prédéterminée et considéré comme insuffisant, l'étape de pulvérisation 29 est mise en oeuvre dans le procédé. Dans ce deuxième cas, la quantité d'eau pulvérisée durant l'étape de pulvérisation 29 de pulvérisation dépend notamment du taux d'humidité des fibres.

Pour constituer des pellets 10, le procédé peut comporter une étape 30 d'extrusion de la matrice cellulosique. Cette étape, par exemple réalisée par une extrudeuse ou une presse à granulés, assure la formation d'au moins un cylindre de matrice cellulosique de dimensions déterminées. Le procédé peut comporter une étape 31 de découpe de chaque cylindre de matrice cellulosique afin de former des pellets 10 de dimensions déterminées. Par exemple, les pellets 10 présentent une longueur comprise entre 5 et 25 mm pour un diamètre compris entre 1 et 5 mm.

Le procédé peut également comporter une étape de séparation 32 entre des pellets 10 fabriqués et des résidus de découpe de la matrice cellulosique. Les résidus peuvent être formés par de la poussière ou des morceaux de matrice cellulosique issus d'une mauvaise découpe du cylindre de matrice cellulosique. Selon une option avantageuse du procédé, les résidus de matrice cellulosique sont réinjectés à l'étape de transport de la matrice cellulosique. Cette possibilité est illustrée par une flèche 34.

Les pellets 10 séparés des résidus de fabrication sont ensuite conditionnés en vue de leur stockage et de leur transport au cours d'une étape 33 d'ensachage des pellets 10. Par exemple, les pellets 10 sont ensachés selon des contenants dont la masse, une fois pleins, est comprise entre 5 et 25 kg.

Les sachets de pellets 10 sont ensuite stockés sur des palettes logistiques pour leur stockage et leur acheminement vers les chantiers de recouvrement des sols.

## Revendications

1. Composition, **caractérisée en ce qu'**elle comporte :
- des fibres de cellulose issues du papier,
- des fibres de bois,
- de la biomasse végétale pyrolysée, et
- un agent gélifiant hydrosoluble.

2. Composition selon la revendication 1, qui comporte en pourcentage massique par rapport au total de leurs masses :
- 10 à 70% de fibres de cellulose,
- 10 à 70 % de fibres de bois,
- 1 à 20% de biomasse végétale pyrolysée, et
- 1 à 10 % de l'agent gélifiant hydrosoluble.

3. Composition selon l'une des revendications 1 et 2, qui comporte, en pourcentage massique par rapport à la masse totale de la composition hors eau additionnelle, 3 à 12 % de biomasse végétale pyrolysée.

4. Composition selon l'une des revendications 1 à 3, qui comporte, en pourcentage massique par rapport à la masse totale de la composition hors eau additionnelle, 2 à 8 % d'agent gélifiant hydrosoluble et, préférentiellement, 3 à 5 % d'agent gélifiant hydrosoluble.

5. Composition selon l'une des revendications 1 à 4, dans laquelle l'agent gélifiant hydrosoluble comporte un polysaccharide hydrosoluble choisi parmi les composés suivants : du galactomannane, du glucomannane, du β-glucan, de l'agar-agar, du carraghénane, ou un mélange de ces composés.

6. Composition selon l'une des revendications 1 à 5, qui comporte une proportion massique des fibres de cellulose par rapport aux fibres de bois comprise entre un rapport 9:1 et un rapport 1:9.

7. Composition selon l'une des revendications 1 à 6, qui comporte, de plus, du fertilisant.

8. Composition selon la revendication 7, qui comporte en pourcentage massique par rapport au total de leurs masses :
- 10 à 70% de fibres de cellulose,
- 10 à 70 % de fibres de bois,
- 1 à 20% de biomasse végétale pyrolysée,
- 1 à 10 % de l'agent gélifiant hydrosoluble et
- 1 à 30 % de fertilisant.

9. Composition selon l'une des revendications 7 ou 8, dans laquelle le fertilisant comporte du sulfate de magnésium.

10. Composition selon l'une des revendications 7 à 9, dans laquelle le fertilisant comporte, de plus, un engrais.

11. Utilisation de la composition selon l'une des revendications 1 à 10, comme matrice cellulosique pour la couverture de sols afin de revégétaliser ces sols.

12. Pellet (10) de matrice cellulosique comprenant une composition selon l'une des revendications 1 à 10.

13. Pellet (10) de matrice cellulosique selon la revendication 12, qui comporte des fibres de cellulose unitaires.

14. Procédé de fabrication d'un pellet (10) selon l'une des revendications 12 et 13, **caractérisé en ce qu'**il comporte :
- une séquence (A) d'étapes de formation d'une matrice cellulosique comprenant des fibres de cellulose unitaires, des fibres de bois, un agent gélifiant hydrosoluble et de la biomasse végétale pyrolysée, comportant au moins :
- une étape de broyage (21) de papier,
- une étape de broyage (22) de fibres de bois,
- une étape de mélange (23) des fibres de papier et de bois broyés,
- une étape d'ajout (25) d'agent gélifiant hydrosoluble et de biomasse végétale pyrolysée, et
- une étape de mélange (26) des fibres de papier et de bois broyés, d'agent gélifiant et de biomasse végétale pyrolysée ; et
- une étape de composition du pellet avec cette matrice cellulosique.

15. Procédé de fabrication selon la revendication 14, dans lequel l'étape de composition du pellet (10) comporte :
- une étape d'extrusion (30) de la matrice cellulosique afin de conformer la matrice cellulosique selon un cylindre de diamètre déterminé,
- une étape de découpe (31) du cylindre de matrice cellulosique afin de former des pellets de dimensions déterminées et
- une étape de séparation (32) entre les pellets découpés et des résidus de matrice cellulosique produits lors de la fabrication.

## Patentansprüche

1. Zusammensetzung, **dadurch gekennzeichnet, dass** sie umfasst:
- Zellulosefasern aus Papier,
- Holzfasern,
- Pyrolysierte pflanzliche Biomasse und
- Ein wasserlösliches Geliermittel.

2. Zusammensetzung nach Anspruch 1, die in Massenprozent bezogen auf ihre Gesamtmassen Folgendes umfasst:
- 10 bis 70 % Zellulosefasern,
- 10 bis 70 % Holzfasern,
- 1 bis 20 % pyrolysierte pflanzliche Biomasse und
- 1 bis 10 % des wasserlöslichen Geliermittels.

3. Zusammensetzung nach einem der Ansprüche 1 und 2, die in Massenprozent bezogen auf die Gesamtmasse der Zusammensetzung ohne zusätzliches Wasser 3 bis 12 % pyrolysierte pflanzliche Biomasse umfasst.

4. Zusammensetzung nach einem der Ansprüche 1 bis 3, die in Massenprozent bezogen auf die Gesamtmasse der Zusammensetzung ohne zusätzliches Wasser 2 bis 8 % wasserlösliches Geliermittel und vorzugsweise 3 bis 5 % wasserlösliches Geliermittel umfasst.

5. Zusammensetzung nach einem der Ansprüche 1 bis 4, wobei das wasserlösliche Geliermittel ein wasserlösliches Polysaccharid umfasst, das aus folgenden Verbindungen ausgewählt ist: Galactomannan, Glucomannan, Beta-Glucan, Agar-Agar, Carrageen oder einer Mischung dieser Verbindungen.

6. Zusammensetzung nach einem der Ansprüche 1 bis 5, die ein Massenverhältnis der Zellulosefasern zu den Holzfasern zwischen 9:1 und 1:9 aufweist.

7. Zusammensetzung nach einem der Ansprüche 1 bis 6, die ferner ein Düngemittel umfasst.

8. Zusammensetzung nach Anspruch 7, die in Massenprozent bezogen auf ihre Gesamtmassen Folgendes umfasst:
- 10 bis 70 % Zellulosefasern,
- 10 bis 70 % Holzfasern,
- 1 bis 20 % pyrolysierte pflanzliche Biomasse,
- 1 bis 10 % des wasserlöslichen Geliermittels und
- 1 bis 30 % Düngemittel.

9. Zusammensetzung nach einem der Ansprüche 7 oder 8, wobei das Düngemittel Magnesiumsulfat enthält.

10. Zusammensetzung nach einem der Ansprüche 7 bis 9, wobei das Düngemittel ferner einen Dünger enthält.

11. Verwendung der Zusammensetzung nach einem der Ansprüche 1 bis 10, als Zellulosematrix zur Bodenabdeckung, um diese Böden neu zu bepflanzen.

12. Zellulosematrix-Pellet (10) mit einer Zusammensetzung nach einem der Ansprüche 1 bis 10.

13. Zellulosematrix-Pellet (10) nach Anspruch 12, das einteilige Zellulosefasern umfasst.

14. Verfahren zur Herstellung eines Pellets (10) nach einem der Ansprüche 12 und 13, **dadurch gekennzeichnet, dass** es umfasst:
- eine Sequenz (A) von Schritten zur Bildung einer Zellulosematrix, die einteilige Zellulosefasern, Holzfasern, ein wasserlösliches Geliermittel und pyrolysierte pflanzliche Biomasse umfasst, die mindestens Folgendes umfasst:
- einen Papier-Mahlschritt (21),
- einen Holzfaser-Mahlschritt (22),
- einen Mischschritt (23) der gemahlenen Papier- und Holzfasern,
- einen Schritt zum Hinzufügen (25) eines wasserlöslichen Geliermittels und pyrolysierter pflanzlicher Biomasse, und
- einen Schritt zum Mischen (26) der gemahlenen Papier- und Holzfasern, des Geliermittels und der pyrolysierten pflanzlichen Biomasse; und
- einen Schritt zum Zusammensetzen des Pellets mit dieser Zellulosematrix.

15. Herstellungsverfahren nach Anspruch 14, wobei der Zusammensetzungsschritt des Pellets (10) umfasst:
- einen Extrusionsschritt (30) der Zellulosematrix, damit die Zellulosematrix einem Zylinder mit einem bestimmten Durchmesser entspricht,
- einen Schneidschritt (31) des Zellulosematrix-Zylinders, um Pellets bestimmter Größe zu bilden und
- einen Trennschritt (32) zwischen den geschnittenen Pellets und den bei der Herstellung anfallenden Zellulosematrix-Rückständen.

## Claims

1. Composition, **characterised in that** it comprises:
- cellulose fibres derived from paper;
- wood fibres;
- pyrolysed plant biomass; and
- a water-soluble gelling agent.

2. Composition according to claim 1, which comprises as a mass percentage of the total of their masses:
- 10 - 70% cellulose fibres;
- 10 - 70% wood fibres;
- 1 - 20% pyrolysed plant biomass; and
- 1 - 10 % water-soluble gelling agent.

3. Composition according to one of claims 1 and 2, which comprises, as a mass percentage of the total mass of the composition excluding additional water, 3 - 12% pyrolysed plant biomass.

4. Composition according to one of claims 1 to 3, which comprises, as a mass percentage of the total mass of the composition excluding additional water, 2 - 8% water-soluble gelling agent, and preferably 3 - 5% water-soluble gelling agent.

5. Composition according to one of claims 1 to 4, wherein the water-soluble gelling agent comprises a water-soluble polysaccharide chosen from the following compounds: galactomannan, glucomannan, β-glucan, agar-agar, carrageenan, or a mixture of these compounds.

6. Composition according to one of claims 1 to 5, which comprises a mass proportion of the cellulose fibres relative to the wood fibres between a ratio of 9:1 and a ratio of 1:9.

7. Composition according to one of claims 1 to 6, which also comprises fertiliser.

8. Composition according to claim 7, which comprises as a mass percentage of the total of their masses:
- 10 - 70% cellulose fibres;
- 10 - 70% wood fibres;
- 1 - 20% pyrolysed plant biomass;
- 1 - 10 % water-soluble gelling agent; and
- 1 - 30 % fertiliser.

9. Composition according to one of claims 7 or 8, wherein the fertiliser comprises magnesium sulphate.

10. Composition according to one of claims 7 to 9, wherein the fertiliser also comprises a plant nutrient.

11. Use of the composition according to one of claims 1 to 10, as a cellulose matrix to provide soil cover for revegetating these soils.

12. Cellulose matrix pellet (10) comprising a composition according to one of claims 1 to 10.

13. Cellulose matrix pellet (10) according to claim 12, which comprises individual cellulose fibres.

14. Method for manufacturing a pellet (10) according to one of claims 12 and 13, **characterised in that** it comprises:
- a sequence (A) of steps for forming a cellulose matrix comprising individual cellulose fibres, wood fibres, a water-soluble gelling agent and pyrolysed plant biomass, comprising at least:
- a step (21) of shredding paper;
- a step (22) of shredding wood fibres;
- a step (23) of mixing shredded paper and wood fibres;
- a step (25) of adding water-soluble gelling agent and pyrolysed plant biomass; and
- a step (26) of mixing shredded paper and wood fibres, gelling agent and pyrolysed plant biomass; and
- a step of making the pellet with this cellulose matrix.

15. Method of manufacture according to claim 14, wherein the step of making the pellet (10) comprises:
- a step (30) of extruding the cellulose matrix to shape the cellulose matrix into a cylinder with a specific diameter;
- a step (31) of cutting the cellulose matrix cylinder to form pellets with specific diameters; and
- a step (32) of separating the cut pellets from the cellulose matrix residues produced during manufacture.
